# EUROPEAN PATENT SPECIFICATION

(11) **EP 4 074 165 B1**
(45) Date of publication and mention of the grant of the patent: **27.05.2026**
(21) Application number: 22168220.6
(22) Date of filing: 13.04.2022
(51) Int. Cl.: A01G 7/04, A01G 9/24, G06Q 10/06, G06Q 50/02, H05B 47/00

(54) **METHOD AND SYSTEM FOR CONTROLLING HORTICULTURAL LIGHT SOURCES DURING DISTRIBUTION**
VERFAHREN UND SYSTEM ZUR STEUERUNG VON GARTENBAULICHTQUELLEN WÄHREND DER VERTEILUNG
PROCÉDÉ ET SYSTÈME DE CONTRÔLE DE SOURCES DE LUMIÈRE HORTICOLES PENDANT LA DISTRIBUTION

(30) Priority: 13.04.2021 US 202163174101 P; 07.05.2021 US 202163185529 P
(43) Date of publication of application: 19.10.2022
(73) Proprietor: Sollum Technologies Inc., Montréal, Québec H3C 3X6 (CA)
(72) Inventor: TREMBLAY, Kassim, Montreal (Quebec), H2Y 2R6 (CA); TREMBLAY, Marc, Montreal (Quebec), H2Y 2R6 (CA)
(74) Representative: EP&C

(56) References cited:
- WO-A1-2015/080211
- JP-A- 2010 154 789
- JP-A- 2013 223 435
- US-A1- 2019 230 867
- US-A1- 2020 296 908

## Description

### TECHNICAL FIELD

The technical field generally relates to lighting, and more particularly concerns methods and systems for controlling horticultural light sources during a distribution process of a plant or crop.

### BACKGROUND

Artificial light sources may be used in horticulture or agriculture to assist or promote the growth of plants or crops. However, it remains a challenge to adequately determine the lighting requirements of a growing plant or crop, as the lighting requirements of the plants or crops may evolve during their distribution process. Therefore, it remains challenging to adequately control horticultural lighting sources irradiating the plants or crops during the distribution process of the plants or crops.

JP2013223435 A discloses a plant cultivation system capable of providing consumers with plants such as fresh and safe vegetables and fruits and efficiently cultivating and providing these plants and also providing plants in which specific functional components contained in plants are contained more than usual.

US2020/296908 A1 discloses an environmental control and transport system for agricultural products including a shipping container comprising at least one zone for containing an agricultural product therein.

JP2010154789 A discloses a vegetable hydroponic system for improving form for producing vegetable and distributing vegetable so as to inexpensively provide fresh vegetables.

There remains a need for a method or system that can provide improvements in methods and systems for controlling horticultural light sources.

### SUMMARY

The present techniques generally concern methods and systems for controlling horticultural light sources illuminating a plant or crop during a distribution process including one or more phases, and more specifically relate to methods and systems for controlling horticultural lighting sources during an initial phase, a transit phase, and a selling phase of the distribution process. In some implementations, the present techniques allow illuminating the plant or crop according to a global dynamic lighting scenario, wherein at least a portion of the global dynamic lighting scenario is associated with a corresponding phase of the distribution process.

In accordance with one aspect of the invention, which is achieved with claim 1, there is provided a method for controlling horticultural light sources during a distribution process of a plant or crop, the distribution process including an initial phase, a transit phase and a selling phase, each phase taking place at a different location one from another, the method including:
determining a first location of the plant or crop, the first location being associated with the initial phase of the distribution process;
during the initial phase of the distribution process:
   determining initial lighting conditions of the plant or crop;
   illuminating the plant or crop with a first horticultural light source to meet the initial lighting conditions of the plant or crop; and
   monitoring initial information representative of horticultural illumination delivered to the plant or crop during the initial phase of the distribution process;
receiving inputs indicating that the plant or crop is to be moved from the first location towards a second location, the second location being associated with the transit phase of the distribution process;
during the transit phase of the distribution process:
   determining transit lighting conditions of the plant or crop;
   illuminating the plant or crop with a transit horticultural light source to meet the transit lighting conditions of the plant or crop and based on the monitored initial information; and
   monitoring transit information representative of horticultural illumination delivered to the plant or crop during the transit phase of the distribution process;
receiving inputs indicating that the plant or crop is to be moved from the second location towards a third location, the third location being associated with the selling phase of the distribution process;
during the selling phase of the distribution process:
   determining subsequent lighting conditions of the plant or crop; and
   illuminating the plant or crop with a horticultural light source to meet the subsequent lighting conditions of the plant or crop and based on the monitored transit information,
   wherein the method comprises tracking a position of the plant or crop during the distribution process.

In some embodiments, the initial phase of the distribution process is associated with a growing stage of a growth process of the plant or crop.

In some embodiments, the transit phase of the distribution process is associated with a flowering stage or a ripening stage of the growth process of the plant or crop.

In some embodiments, the selling phase of the distribution process is associated with the flowering stage, the ripening stage, or a preserving stage of the growth process of the plant or crop.

In some embodiments, the method further includes scheduling a transfer of the plant or crop, based on said tracking the position of the plant or crop.

In some embodiments, the method further includes determining a transit duration and based on the transit duration, adjusting the transit illumination conditions to meet a targeted maturity of the plant or crop at the end of the transit phase of the distribution process.

In some embodiments, the method further includes updating the transit duration based on an unexpected event and adjusting the transit lighting conditions accordingly.

In some embodiments, a transition between the initial lighting conditions and the transit lighting conditions is relatively smooth.

In some embodiments, a transition between the transit lighting conditions and the subsequent lighting conditions is relatively smooth.

In accordance with another aspect of the invention, which is achieved with claim 8, there is provided a system for controlling horticultural light sources during a distribution process of a plant or crop, the distribution process including an initial phase, a transit phase and a selling phase, each phase taking place at a different location one from another, the system including:
at least three horticultural lighting sources, each being respectively associated with a corresponding first location, a corresponding second location and a third location;
a server or a controller operatively connected to each of said at least three horticultural lighting sources, the server or controller being configured for:
   during the initial phase of the distribution process:
      determining initial lighting conditions of the plant or crop;
      sending illumination instructions to a first horticultural light source to meet the initial lighting conditions of the plant or crop; and
      monitoring initial information representative of horticultural illumination delivered to the plant or crop during the initial phase of the distribution process;
   receiving inputs indicating that the plant or crop is to be moved from the first location towards the second location, the second location being associated with the transit phase of the distribution process;
   during the transit phase of the distribution process:
      determining transit lighting conditions of the plant or crop;
      sending illumination instructions to a transit horticultural light source to meet the transit lighting conditions of the plant or crop and based on the monitored initial information; and
      monitoring transit information representative of horticultural illumination delivered to the plant or crop during the transit phase of the distribution process;
   receiving inputs indicating that the plant or crop is to be moved from the second location towards a third location, the third location being associated with the selling phase of the distribution process;
   during the selling phase of the distribution process:
      determining subsequent lighting conditions of the plant or crop; and
      sending illumination instructions to a horticultural light source to meet the subsequent lighting conditions of the plant or crop and based on the monitored transit information; and
   a user interface configured to interact with at least one of said at least three horticultural light sources and the server or controller, wherein
   the system further includes a tracking module operatively connected to the user interface, the tracking module being configured for tracking a position of the plant or crop during the distribution process.

In some embodiments, the initial phase of the distribution process is associated with a growing stage of a growth process of the plant or crop.

In some embodiments, the transit phase of the distribution process is associated with a flowering stage or a ripening stage of the growth process of the plant or crop.

In some embodiments, the selling phase of the distribution process is associated with the flowering stage, the ripening stage, or a preserving stage of the growth process of the plant or crop.

In some embodiments, the controller is further configured for scheduling a transfer of the plant or crop, based on said tracking the position of the plant or crop.

In some embodiments, the controller is further configured for determining a transit duration and based on the transit duration, adjusting the transit illumination conditions to meet a targeted maturity of the plant or crop at the end of the transit phase of the distribution process.

In some embodiments, the controller is further configured for updating the transit duration based on an unexpected event and adjusting the transit lighting conditions accordingly.

In some embodiments, a first dedicated controller is associated with the first location, a second dedicated is associated with the second location and a third dedicated controller is associated with the third location, each of the first dedicated controller, the second dedicated controller and the third dedicated controller being operatively connected to the user interface.

In accordance with another aspect, which is not covered by the scope of the appended claims, there is provided a method for controlling horticultural light sources during a distribution process of a plant or crop, the distribution process including an initial phase and a transit phase, each phase taking place at a different location one from another, the method including:
determining a first location of the plant or crop, the first location being associated with the initial phase of the distribution process;
during the initial phase of the distribution process:
   determining initial lighting conditions of the plant or crop;
   illuminating the plant or crop with a first horticultural light source to meet the initial lighting conditions of the plant or crop; and
   monitoring initial information representative of horticultural illumination delivered to the plant or crop during the initial phase of the distribution process;
receiving inputs indicating that the plant or crop is to be moved from the first location towards a second location, the second location being associated with the transit phase of the distribution process;
during the transit phase of the distribution process:
   determining transit lighting conditions of the plant or crop; and
   illuminating the plant or crop with a transit horticultural light source to meet the transit lighting conditions of the plant or crop and based on the monitored initial information.

In accordance with another aspect, which is not covered by the scope of the appended claims, there is provided a system for controlling horticultural light sources during a distribution process of a plant or crop, the distribution process including an initial phase and a transit phase, each phase taking place at a different location one from another, the system including:
at least two horticultural lighting sources, each being respectively associated with a corresponding first location and a corresponding second location;
a server or a controller operatively connected to each of said at least two horticultural lighting sources, the server or controller being configured for:
   during the initial phase of the distribution process, at the first location:
      determining initial lighting conditions of the plant or crop;
      sending illumination instructions to a first horticultural light source to meet the initial lighting conditions of the plant or crop; and
      monitoring initial information representative of horticultural illumination delivered to the plant or crop during the initial phase of the distribution process;
   receiving inputs indicating that the plant or crop is to be moved from the first location towards the second location, the second location being associated with the transit phase of the distribution process;
   during the transit phase of the distribution process, at the second location:
      determining transit lighting conditions of the plant or crop;
      sending illumination instructions to a transit horticultural light source to meet the transit lighting conditions of the plant or crop and based on the monitored initial information; and
      monitoring transit information representative of horticultural illumination delivered to the plant or crop during the transit phase of the distribution process; and
   a user interface configured to interact with at least one of said at least two horticultural light sources and the server or controller.

In accordance with another aspect, which is not covered by the scope of the appended claims, there is provided a method for controlling horticultural light sources during a distribution process of a plant or crop, the distribution process including an initial phase and a selling phase, each phase taking place at a different location one from another, the method including:
determining a first location of the plant or crop, the first location being associated with the initial phase of the distribution process;
during the initial phase of the distribution process:
   determining initial lighting conditions of the plant or crop;
   illuminating the plant or crop with a first horticultural light source to meet the initial lighting conditions of the plant or crop; and
   monitoring initial information representative of horticultural illumination delivered to the plant or crop during the initial phase of the distribution process;
receiving inputs indicating that the plant or crop is to be moved from the first location towards a second location, the second location being associated with the selling phase of the distribution process;
during the selling phase of the distribution process:
   determining subsequent lighting conditions of the plant or crop; and
   illuminating the plant or crop with a horticultural light source to meet the subsequent lighting conditions of the plant or crop and based on the monitored initial information.

In accordance with another aspect, which is not covered by the scope of the appended claims, there is provided a system for controlling horticultural light sources during a distribution process of a plant or crop, the distribution process including an initial phase and a selling phase, each phase taking place at a different location one from another, the system including:
at least two horticultural lighting sources, each being respectively associated with a corresponding first location and a corresponding second location;
a server or a controller operatively connected to each of said at least two horticultural lighting sources, the server or controller being configured for:
   during the initial phase of the distribution process, at the first location:
      determining initial lighting conditions of the plant or crop;
      sending illumination instructions to a first horticultural light source to meet the initial lighting conditions of the plant or crop; and
      monitoring initial information representative of horticultural illumination delivered to the plant or crop during the initial phase of the distribution process;
   receiving inputs indicating that the plant or crop is to be moved from the first location towards the second location, the second location being associated with the selling phase of the distribution process;
   during the selling phase of the distribution process, at the second location:
      determining subsequent lighting conditions of the plant or crop; and
      sending illumination instructions to illuminate the plant or crop with a horticultural light source to meet the subsequent lighting conditions of the plant or crop and based on the monitored initial information; and
   a user interface configured to interact with at least one of said at least two horticultural light sources and the server or controller.

In accordance with another aspect, which is not covered by the scope of the appended claims, there is provided a method for controlling horticultural light sources during a distribution process of a plant or crop, the distribution process including a transit phase and a selling phase, each phase taking place at a different location one from another, the method including:
obtaining information representative of past horticultural illumination delivered to the plant or crop before the transit phase;
during the transit phase of the distribution process:
   determining transit lighting conditions of the plant or crop;
   illuminating the plant or crop with a transit horticultural light source to meet the transit lighting conditions of the plant or crop and based on the obtained information representative of past horticultural illumination delivered to the plant or crop before the transit phase; and
   monitoring transit information representative of horticultural illumination delivered to the plant or crop during the transit phase of the distribution process;
receiving inputs indicating that the plant or crop is to be towards a second location, the second location being associated with the selling phase of the distribution process;
during the selling phase of the distribution process:
   determining subsequent lighting conditions of the plant or crop; and
   illuminating the plant or crop with a horticultural light source to meet the subsequent lighting conditions of the plant or crop and based on the monitored transit information.

In accordance with another aspect, which is not covered by the scope of the appended claims, there is provided a system for controlling horticultural light sources during a distribution process of a plant or crop, the distribution process including a transit phase and a selling phase, each phase taking place at a different location one from another, the system including:
at least two horticultural lighting sources, each being respectively associated with a corresponding first location and a corresponding second location;
a server or a controller operatively connected to each of said at least two horticultural lighting sources, the server or controller being configured for:
   during the transit phase of the distribution process, at the first location:
      determining transit lighting conditions of the plant or crop;
      sending illumination instructions to a first horticultural light source to meet the transit lighting conditions of the plant or crop; and
      monitoring initial information representative of horticultural illumination delivered to the plant or crop during the transit phase of the distribution process;
   receiving inputs indicating that the plant or crop is to be moved from the first location towards the second location, the second location being associated with the selling phase of the distribution process;
   during the selling phase of the distribution process, at the second location:
      determining subsequent lighting conditions of the plant or crop; and
      sending illumination instructions to illuminate the plant or crop with a horticultural light source to meet the subsequent lighting conditions of the plant or crop and based on the monitored initial information; and
   a user interface configured to interact with at least one of said at least two horticultural light sources and the server or controller.

In accordance with another aspect, which is not covered by the scope of the appended claims, there is provided a non-transitory computer readable storage medium having stored thereon computer executable instructions that, when executed by a processor, cause the processor to perform the methods herein disclosed, or at least one step of the methods.

Other features and advantages of the method and system described herein will be better understood upon a reading of preferred embodiments thereof with reference to the appended drawings. Although specific features described in the above summary and in the detailed description below may be described with respect to specific embodiments or aspects, it should be noted that these specific features can be combined with one another unless stated otherwise.

### BRIEF DESCRIPTION OF THE DRAWINGS

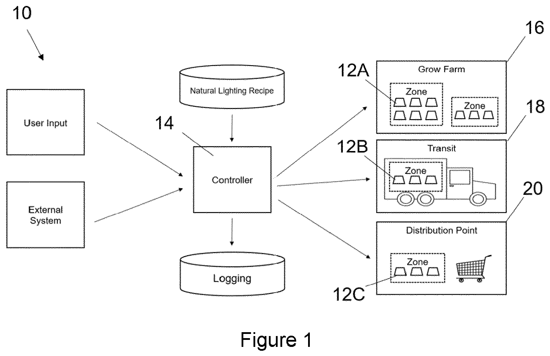

Figure 1 illustrates various aspects of the technology described herein.

### DETAILED DESCRIPTION

In the present description, similar features in the drawings have been given similar reference numerals. To avoid cluttering certain figures, some elements may not have been indicated if they were already identified in a preceding figure. It should also be understood that the elements of the drawings are not necessarily depicted to scale, since emphasis is placed on clearly illustrating the elements and structures of the present embodiments. Furthermore, positional descriptors indicating the location and/or orientation of one element with respect to another element are used herein for ease and clarity of description. Unless otherwise indicated, these positional descriptors should be taken in the context of the figures and should not be considered limiting. More particularly, it will be understood that such spatially relative terms are intended to encompass different orientations in the use or operation of the present embodiments, in addition to the orientations exemplified in the figures.

The terms "a", "an" and "one" are defined herein to mean "at least one", that is, these terms do not exclude a plural number of items, unless stated otherwise.

Terms such as "substantially", "generally" and "about", that modify a value, condition or characteristic of a feature of an exemplary embodiment, should be understood to mean that the value, condition or characteristic is defined within tolerances that are acceptable for the proper operation of this exemplary embodiment for its intended application.

Unless stated otherwise, the terms "connected" and "coupled", and derivatives and variants thereof, refer herein to any structural or functional connection or coupling, either direct or indirect, between two or more elements. For example, the connection or coupling between the elements may be acoustical, mechanical, optical, electrical, thermal, logical, or any combinations thereof.

The terms "match", "matching" and "matched" are intended to refer herein to a condition in which two elements are either the same or within some predetermined tolerance of each other. That is, these terms are meant to encompass not only "exactly" or "identically" matching the two elements but also "substantially", "approximately" or "subjectively" matching the two elements, as well as providing a higher or best match among a plurality of matching possibilities.

In the present description, the expression "based on" is intended to mean "based at least partly on", that is, this expression can mean "based solely on" or "based partially on", and so should not be interpreted in a limited manner. More particularly, the expression "based on" could also be understood as meaning "depending on", "representative of", "indicative of", "associated with" or similar expressions.

It should be noted that, in the context of the current disclosure, the expression "plants or crops" may encompass a broad variety of multicellular organisms, including photosynthetic eukaryotes. Non limitative examples of plants or crops are seedlings, ornamental crops, ornamental plants, plugs, liners, fruits, small fruits, vegetables, leafy greens, herbs, young plants, high-value crops, and many others. The plants or crops may be produced for human food, non-human food or non-food applications. The growing process of the plants or crops generally includes a plurality of subsequent plant growth stages, such as, for example, seed germination (or "sprout"), seedling, vegetative, bud stage (or "budding"), flowering and ripening. It should be understood that, in the present description, the plants or crops can be at any one of the plant growth stages or at a transition between any two subsequent growth stages.

The expression "horticultural light", synonyms and derivatives thereof will be used throughout the present disclosure, and refers to the use of optical techniques, systems, and methods for assisting, maintaining, stimulating and/or optimizing plants or crops growth. The horticultural light may irradiate or illuminate the plants or crops during any one of the plant growth stages. The horticultural light, which is the light generated by the horticultural lighting apparatus, may be produced or generated using an artificial light source or similar devices, apparatuses, and systems. Non-limiting examples of artificial light sources include incandescent light sources, fluorescent light sources, high-intensity discharge (HID) light sources such as mercury vapor, metal halide (MH), high-pressure sodium (HPS) and low-pressure sodium (LPS) light sources, solid-state light sources including LED light sources, and laser sources. The horticultural light is associated with an illumination spectrum or profile. In some implementations, the horticultural light produced by the horticultural lighting apparatus have a profile substantially similar to light reaching the crop or plant. The expression "illumination spectrum" is used to broadly refer to the spectral power distribution of an illumination. The illumination spectrum can represent the distribution of power radiated per unit area and per unit wavelength or frequency over a spectral region of the electromagnetic spectrum. It should be noted that using horticultural light may be used to irradiate or illuminate plants or crops growing in a horticultural structure providing regulated climatic conditions to the plants or crops. Nonlimitative examples of horticultural structures include greenhouse, glasshouse and hothouse.

In the present description, the terms "light" and "optical", and variants and derivatives thereof, are used to refer to radiation in any appropriate region of the electromagnetic spectrum. The terms "light" and "optical" are therefore not limited to visible light, but can also include, without being limited to, the infrared and ultraviolet regions. For example, in some implementations, the present techniques can be used with electromagnetic signals having wavelengths ranging from about 250 nm to about 2500 nm. However, this range is provided for illustrative purposes only and some implementations of the present techniques may operate outside this range. Also, the skilled person will appreciate that the definition of the ultraviolet, visible and infrared ranges in terms of spectral ranges, as well as the dividing lines between them, can vary depending on the technical field or the definitions under consideration, and are not meant to limit the scope of applications of the present techniques.

The expressions "natural light" or "natural light conditions" generally refer to light having spectral characteristics corresponding or similar to those of sunlight, moonlight or starlight. The spectral profile of natural light, particularly sunlight, varies as a function of geographic location, time of day, time of year, weather, cloud coverage, and several other factors. Several standards are known in the art to provide a spectral reference for natural light. For example, the Commission internationale de l'éclairage (CIE) has established the D series of well-defined daylight standard illuminants representing natural light under different conditions. One well-known standard is CIE Standard Illuminant D65, which is a daylight illuminant that intends to represent the average midday light in Western or Northern Europe. Other examples of CIE Standard Illuminants for daylight include the D50, D55, and D75 standard illuminants. Sunlight, which refers to the total spectrum of electromagnetic radiation emitted by the Sun and reaching the Earth, has a broad spectral range including ultraviolet radiation, visible light, and infrared radiation. Accordingly, standard illuminants extend within the solar radiation spectrum. For example, Standard Illuminant D65 extends from 300 nm to 830 nm. Non-limiting examples of natural light sources include sunlight, moonlight, starlight, twilight, lightning, and firelight.

In the present description, the term "solid-state light emitter" refers to any light-emitting device that converts electrical energy into electromagnetic radiation through the recombination of electronic carriers (i.e., electrons and holes) in a light emitting layer or region. The emitting layer or region can include, but is not limited to, silicon, silicon carbide, gallium nitride and/or other semiconductor materials, and may or may not include a substrate such as sapphire, silicon, silicon carbide and/or other microelectronic substrates. The solid-state light emitters can include both inorganic and organic light emitters, many of which are known to the skilled person and need not be described in detail herein. Non-limiting examples of types of solid-state light emitters include semiconductor light-emitting diodes (LEDs), semiconductor laser diodes, vertical cavity surface emitting lasers (VCSELs), other semiconductor light emitting devices or lamps, organic light-emitting diodes (OLEDs), and polymer light-emitting diode (PLEDs).

The expression "lighting scenario" is understood to refer to the generation of light, such as for illuminating purposes, according to predetermined optical characteristics (e.g., spectral content, intensity, polarization) that vary or evolve over time during a given time period. The optical characteristics of the generated light may correspond to or emulate those of natural lighting conditions. The natural light may emulate or be inspired from the actual light conditions experienced at a specific geographical location, date and time. It is appreciated that devising lighting scenarios that combine natural light conditions corresponding to different geographical locations is possible in some applications (e.g., a scenario could be build using sunrise, midday and sunset conditions corresponding to three distinct locations on Earth, at the same or different dates). In other embodiments, however, the natural light conditions may be different from real life conditions on Earth. By way of example, the spectrum of natural light generated according to the method described herein may differ from an actual spectral content of sunlight due to the absence of spectral components which are undesired or unnecessary in a given application context, or conversely by the enhancement or addition of wavelengths then are considered advantageous or required. The present techniques may rely on the use of solid-state light emitters. The solid-state light emitters can be driven to produce the lighting scenario using sets of control parameters. It should be noted that a plurality of lighting scenarios may be combined to collectively determine a "recipe" or a "recipe bundle". The recipe or the recipe bundle refers to a sequence of lighting scenarios.

In some embodiments, the lighting scenario may emulate lighting conditions over the course of a day, from dawn to dusk, or over a portion of a day. Indeed, the spectral contents of light reaching a particular location on earth from the Sun is not constant as the day progress. In some instances, it can be customary to characterize natural light according to its Correlated Color Temperature (CCT) value, expressed in Kelvin (K). By convention, the CCT is defined by the CIE as "the temperature of the Planckian radiator whose perceived color most closely resembles that of a given stimulus at the same brightness and under specified viewing conditions" (CIE/IEC 17.4:1987, International Lighting Vocabulary). Lower CCT values correspond to "warmer" light. Hence, a day with a clear blue sky can begin at dawn with light in a warm CCT spectrum range, such as between 1500K and 3000K, then progress to about 5000K to 7500K at mid-day and return to the 1500K to 3000K range towards dusk. In horticultural or agricultural applications, the light conditions in a region of the world from which a cultivated produce originates or where this produce is known to thrive can be emulated (e.g., growing tomatoes using light conditions from a sunny day in June in Tuscany). In other examples, the lighting conditions may be adapted in view of observations or discoveries regarding optimal or enhanced lighting conditions for growing a given agricultural output, such as for example to follow the McCree Curve, which represents the average photosynthetic response of plants to light energy.

The present description generally relates to methods and systems for controlling horticultural light sources during a distribution process of a plant or crop. Broadly described, the present techniques generally concern methods and systems for controlling horticultural lighting sources during an initial phase, a transit phase, and a selling phase of the distribution process. In some implementations, the present techniques allow illuminating the plant or crop according to a global dynamic lighting scenario, wherein at least a portion of the global dynamic lighting scenario is associated with each phase of the distribution process. As such, the lighting scenario can follow the plants or crops throughout their entire growth process, even if the plants or crops are moved or displaced during the distribution process.

### System for controlling horticultural light sources

With reference to Figure 1, there is shown an embodiment of a system 10 for controlling horticultural light sources (labelled 12A,B,C in Figure 1) during a distribution process of a plant or crop. Of note, the distribution process includes one or more phases, such as, for example, an initial phase 16, a transit phase 18, and a selling phase 20, each phase taking place at a different location one from another. Each phase of the distribution process may be associated with a growth stage of the plant or crop, or at least a portion thereof. It should be noted that the illumination requirements of the plant or crop generally evolve or change from one phase towards another, and that the present techniques allow illuminating the plant or crop according to these dynamic illumination requirements of the plant or crop. In some embodiments, the initial phase 16 of the distribution process may be associated with a crop stage, a growing stage and/or any other stages of the growth process of the plant or crop and may take place in a horticultural structure, which is labelled as a "grow farm" in Figure 1. It should be noted that the present techniques are compatible with the horticultural structure described in US 63/174 101.

In some embodiments, the transit phase 18 of the distribution process may be associated with a flowering stage, a ripening stage and/or any other stages of the growth process of the plant or crop and may take place in a delivery truck or similar vehicles. The delivery truck or vehicles may be equipped with horticultural light sources 12B to illuminate the plant or crop during the transit phase 18 of the distribution process. It should be noted that while the growth process of the plant or crop may continue during the transit phase 18, the growth process of the plant or crop could alternatively be in a stand-by mode. In the latter case, the illumination conditions of the plant or crop during the transit phase 18 are such that the state of the plant or crop is maintained, i.e., without growth, during transit, which may be useful for plants or crops having a relatively short lifecycle. In some embodiments, the selling phase 20 of the distribution process may be associated with a flowering stage, a ripening stage, a preserving and/or any other stages of the growth process of the plant or crop and may take place in any distribution points such as, for example and without being limitative, grocery, supermarket, kiosks, restaurants, kitchens, food trucks and the like. The distribution points may be equipped with horticultural light sources 12C to illuminate the plant or crop during the selling phase 20 of the distribution process, which may be useful to preserve, maintain, improve, or enhance the shelf life of the plant or crop, once offered for sale at the distribution points.

Now that each phase of the distribution process has been presented, the system 10 will be described in greater detail.

The system 10 includes at least three horticultural light sources 12A,B,C, at least one server or controller 14 and a user interface (not illustrated). In some embodiments, which are not covered by the scope of appended claims, the system 10 may include at least two horticultural light sources (for example any combinations of two of the horticultural light sources 12A, 12B and 12C), at least one server or controller 14 and a user interface (not illustrated), as it will be explained in greater detail below. The horticultural light sources 12A,B,C, the server or controller, and the user interface may be in data communication one with another. It should be noted that the expression "data communication" may refer to any types of direct connection and/or indirect connection. For example, the components of the system 10 may be connected one to another through direct communication such as a wired connection or via a network allowing data communication between devices or components of a network capable of receiving and/or sending data, which may include, to name a few, publicly accessible networks of linked networks, possibly operated by various distinct parties, such as the Internet, private networks (PN), personal area networks (PAN), local area networks (LAN), wide area networks (WAN), cable networks, satellite networks, cellular telephone networks and the like, or any combinations thereof.

As it has been previously mentioned, the system 10 includes two, three, or even more horticultural lighting sources. In fact, each phase of the distribution process takes place in different locations one from another, and each location are provided with at least one horticultural light source 12A, 12B or 12C. For example, in the context of a distribution process including an initial phase 16 taking place in a first location (*e.g.*, a horticultural structure), a transit phase 18 taking place in a second location (*e.g.*, a delivery truck) and a selling phase 20 taking place in a third location (*e.g*., a grocery store), at least one horticultural light source 12A is provided in the first location, at least one horticultural light source 12B is provided in the second location, and at least one horticultural light source 12C is provided in the third location. As better illustrated in Figure 1, each location may include or be provided with a plurality of horticultural light sources. In the nonlimitative example illustrated in Figure 1, the first location may include nine horticultural light sources 12A (distributed in two zones), the second location may include three horticultural light sources 12B and the third location may include three horticultural light sources 12C. It should be noted that the aforementioned examples serve an illustrative purpose only and that each location may include any number of horticultural light sources. More specifically, the configuration, the position and the arrangement of the horticultural light sources 12A,B,C may vary or be adjusted depending on the application and the targeted growth objectives. For example, in a distribution process including only two phases, the system 10 may include at least two horticultural light sources. For example, and without being limitative, when the distribution process may include an initial phase 16 and a transit phase 18 only, or alternatively an initial phase 16 and a selling phase 20 only, or yet alternatively a transit phase 18 and a selling phase 20 only, then each location or point of the distribution process may be provided with a corresponding at least one horticultural light source.

In some embodiments, the distribution point may be a restaurant, a kitchen, a food truck, or any other locations that may offer fresh products such as plants, flowers, herbs and many others.

In some embodiments, the horticultural light sources 12A, 12B and/or 12C may be embodied by a lamp similar to the lighting system 10 described in WO 2016 119 063.

The controller 14 (or server) is configured to perform a series of steps that will be later described. The controller 14 (or server) is operatively connected to each of said at least three horticultural lighting sources and is configured to be operated according to the ongoing phase of the distribution process. For example, during the initial phase 16 of the distribution process, the controller 14 (or server) may be configured to determine initial lighting conditions of the plant or crop, send illumination instructions to a first horticultural light source 12A to meet the initial lighting conditions of the plant or crop, and monitor initial information representative of horticultural illumination delivered to the plant or crop during the initial phase 16 of the distribution process. Towards the end of the initial phase 16 or after the end of the initial phase 16, the controller 14 may be configured to receive inputs indicating that the plant or crop is to be moved from the first location towards the second location. As previously mentioned, the second location is associated with a subsequent phase of the distribution process, which may be, for example, a transit phase 18 and/or a selling phase 20. During the transit phase 18 of the distribution process, the controller 14 may be further configured to determine transit lighting conditions of the plant or crop, send illumination instructions to a transit horticultural light source 12B to meet the transit lighting conditions of the plant or crop and based on the monitored initial information, and monitor transit information representative of horticultural illumination delivered to the plant or crop during the transit phase 18 of the distribution process. Towards the end of the transit phase 18 or after the end of the transit phase 18, the controller 14 may be configured to receive inputs indicating that the plant or crop is to be moved from the second location towards a third location. The third location may be associated with the selling phase 20 of the distribution process in the context of a distribution process including an initial phase 16, a transit phase 18 and a selling phase 20. During the selling phase 20 of the distribution process, the controller 14 (or server) may be configured to determine subsequent lighting conditions of the plant or crop and send illumination instructions to a horticultural light source 12C to meet the subsequent lighting conditions of the plant or crop and based on the monitored transit information. As previously described, the controller 14 (or server) may be configured to send illumination instructions to any one the horticultural light sources 12A,B,C, such that the corresponding horticultural light source 12A, 12 B and/or 12C is driven to meet the corresponding illumination requirements. Of note, the illumination requirements of the plants or crops generally depend on the growth stage of the plants or crops, and the illumination instructions should be representative of the illumination requirements of the plants or crops.

In some embodiments, each location (*i.e.,* a region associated with one of the phases of the distribution process) includes a dedicated controller (not illustrated in the Figures) and each dedicated controller is operatively connected to the user interface.

It should be noted that the illumination conditions of the plants or crops should substantially be matched or continuous from one location to another. For instance, the transition in the horticultural illumination of the plant or crop between the initial phase 16 and the transit phase 18, the transit phase 18 and the selling phase 20 and any combinations thereof should be relatively smooth. More specifically, if the plants or crops were irradiated according to a first portion of a lighting scenario during the initial phase 16 of the distribution process, the plants or crops, during the transit phase 18 of the distribution process, should be irradiated according to a second portion of the same lighting scenario that was previously used. In so doing, the present techniques provide a way of providing appropriate illumination conditions to the plants or crops throughout their distribution process, independently of their location during the initial phase 16, the transit phase 18 and/or the selling phase 20.

The user interface is configured to interact with at least one of said at least two or three horticultural light sources 12A,B,C and the server or controller. The user interface may be in data communication with each horticultural light source 12A,B,C and the controller 14 (or server). In some embodiments, the user interface may be a graphical user interface. In some embodiments, the user interface may be displayed on a display or a screen. In some embodiments, the graphical user interface may be part of a web-based application that may be accessed and displayed using a computing device connected to the Internet or any types of network.

The system 10 includes a plant or crop tracking module operatively connected to the user interface. Such a module is used to track a position or location of the plants or crops during the distribution process. The tracking of the plants or crops may be continuous, in real time, near real time, periodic, automatic, manual, semi-automatic, and any combinations thereof. In some embodiments, the plant or crop tracking module may rely on existing geolocating techniques. The tracking module may be used to plan or schedule the transfer of the plant or crop from one location to another (*i.e.,* to transition from one phase of the distribution process towards a subsequent phase of the distribution process). Scheduling the transfer of the plant or crop may be based on growth parameters of the plant or crops and/or any other properties of the plant or crop.

In some embodiments, the controller 14 may be configured to determine a transit duration and based on the transit duration, adjust the transit illumination conditions. The adjustment(s) of the transit illumination conditions may be based on a targeted maturity of the plant or crop to be reached at the end of the transit phase 18, *i.e.,* just before the selling phase 18 of the distribution process. In some embodiments, the controller 14 may be configured to update the transit duration based on an unexpected event. For example, the delivery may be delayed or hastened due to road conditions and/or weather. The controller 14 may be configured to detect a change in the transit duration and adjust the transit lighting conditions accordingly. In some embodiments, the system 10 may include a memory, or may include or be connected to a database to store the control parameters of the horticultural light sources 12A,B,C, past lighting scenarios or illumination conditions of the plants or crops, calibration data, and/or other relevant data, such as the lifecycle of the plant or crop and/or the expiration date or shelf life. In some embodiments, the information may be provided in a dataset. The dataset may be stored as a relational database and may have a database format commonly used in the art, such as Domino, SQL, SCSV, Office 365, or the like. The dataset may comprise textual information, numeral information, time information, date information, image information, and any combinations thereof.

The system 10 may be in data communication with an external system providing information about the plant or crop and/or component(s) of the system 10. Additional modules having specific functionalities could also be provided.

The system 10 having been described may be implemented in computer programs executed on programmable computers. A programmable computer generally includes at least a processor and a data storage system that may include volatile and non-volatile memory and/or storage elements. The programmable computer may be a programmable logic unit, a mainframe computer, server, and personal computer, cloud-based program or system, laptop, personal data assistance, cellular telephone, smartphone, wearable device, tablet device, virtual reality devices, smart display devices, set-top box, video game console, portable video game devices, or virtual reality device. In some embodiments, the systems and methods may be provided as a plug-in. In some embodiments, one or more components of the system having been described may be provided as a plug-in. The expression "plug-in" herein refers to a software component adding a predetermined feature or functionality to the system 10. Providing the different modules as plug-ins may be associated with some benefits, such as, for example and without being limitative, adaptability, modularity and flexibility.

Of note, the computer programs may be implemented in a high-level procedural or object-oriented programming and/or scripting language to communicate with a computer system. The programs could alternatively be implemented in assembly or machine language, if desired. In these implementations, the language may be a compiled or interpreted language. The computer programs are generally stored on a storage media or a device readable by a general or special purpose programmable computer for configuring and operating the computer when the storage media or device is read by the computer to perform the procedures described herein. In some embodiments, the systems may be embedded within an operating system running on the programmable computer.

### Method for controlling horticultural light sources

Different embodiments of a method for tracking and controlling horticultural light sources during a distribution process of a plant or crop will now be described. As it has been previously described, the distribution process includes at least two distinct phases, which may be, for example and without being limitative, an initial phase, a transit phase and a selling phase. Broadly described, the method may include determining the location of the plant or crop, determining lighting requirements of the plant or crop at the determined location and operating horticultural light sources to meet the lighting requirements of the plant or crop.

In a first implementation, the distribution process includes an initial phase, a transit phase and a selling phase, each phase taking place at a different location one from another. The method includes determining a first location of the plant or crop, the first location being associated with the initial phase of the distribution process. The method also includes, during the initial phase of the distribution process, determining initial lighting conditions of the plant or crop, illuminating the plant or crop with a first horticultural light source to meet the initial lighting conditions of the plant or crop, and monitoring initial information representative of horticultural illumination delivered to the plant or crop during the initial phase of the distribution process. The method further includes receiving inputs indicating that the plant or crop is to be moved from the first location towards a second location. The second location is associated with the transit phase of the distribution process. The method further includes, during the transit phase of the distribution process, determining transit lighting conditions of the plant or crop, illuminating the plant or crop with a transit horticultural light source to meet the transit lighting conditions of the plant or crop and based on the monitored initial information, and monitoring transit information representative of horticultural illumination delivered to the plant or crop during the transit phase of the distribution process. The method further includes receiving inputs indicating that the plant or crop is to be moved from the second location towards a third location. The third location is associated with the selling phase of the distribution process. The method further includes, during the selling phase of the distribution process, determining subsequent lighting conditions of the plant or crop and illuminating the plant or crop with a horticultural light source to meet the subsequent lighting conditions of the plant or crop and based on the monitored transit information.

In a second implementation, the distribution process includes an initial phase and a transit phase, each phase taking place at a different location one from another. The method according to this second implementation includes determining a first location of the plant or crop. The first location is associated with the initial phase of the distribution process. The method further includes, during the initial phase of the distribution process. determining initial lighting conditions of the plant or crop, illuminating the plant or crop with a first horticultural light source to meet the initial lighting conditions of the plant or crop, and monitoring initial information representative of horticultural illumination delivered to the plant or crop during the initial phase of the distribution process. The method also includes receiving inputs indicating that the plant or crop is to be moved from the first location towards a second location. The second location is associated with the transit phase of the distribution process. The method also includes, during the transit phase of the distribution process, determining transit lighting conditions of the plant or crop and illuminating the plant or crop with a transit horticultural light source to meet the transit lighting conditions of the plant or crop and based on the monitored initial information.

In a third implementation, the distribution process includes an initial phase and a selling phase, each phase taking place at a different location one from another. The method includes determining a first location of the plant or crop. The first location is associated with the initial phase of the distribution process. The method also includes, during the initial phase of the distribution process, determining initial lighting conditions of the plant or crop, illuminating the plant or crop with a first horticultural light source to meet the initial lighting conditions of the plant or crop, and monitoring initial information representative of horticultural illumination delivered to the plant or crop during the initial phase of the distribution process.

The method further includes receiving inputs indicating that the plant or crop is to be moved from the first location towards a second location. The second location is associated with the selling phase of the distribution process. The method further includes during the selling phase of the distribution process, determining subsequent lighting conditions of the plant or crop and illuminating the plant or crop with a horticultural light source to meet the subsequent lighting conditions of the plant or crop and based on the monitored initial information.

In a fourth implementation, the distribution process includes a transit phase and a selling phase, each phase taking place at a different location one from another. The method includes obtaining information representative of past horticultural illumination delivered to the plant or crop before the transit phase and, during the transit phase of the distribution process, determining transit lighting conditions of the plant or crop, illuminating the plant or crop with a transit horticultural light source to meet the transit lighting conditions of the plant or crop and based on the obtained information representative of past horticultural illumination delivered to the plant or crop before the transit phase, and monitoring transit information representative of horticultural illumination delivered to the plant or crop during the transit phase of the distribution process. The method further includes receiving inputs indicating that the plant or crop is to be towards a selling location. The second location is associated with the selling phase of the distribution process. The method also includes, during the selling phase of the distribution process, determining subsequent lighting conditions of the plant or crop and illuminating the plant or crop with a horticultural light source to meet the subsequent lighting conditions of the plant or crop and based on the monitored transit information.

The method includes tracking the plants or crops to obtain a position or location of the plants or crops during the distribution process. This step of tracking the plants or crops may be continuous, in real time, near real time, periodic, automatic, manual, semi-automatic, and any combinations thereof.

In some embodiments, the method may further include a step of determining a transit duration and based on the transit duration, adjusting the transit illumination conditions. The adjustment(s) of the transit illumination conditions may be based on a targeted maturity of the plant or crop to be reached at the end of the transit phase, *i.e.,* just before the selling phase of the distribution process.

In some embodiments, the step of determining the transit duration may include updating the transit duration based on an unexpected event. For example, the delivery may be delayed or hastened due to road conditions and/or weather. The method may be adapted to detect a change in the transit duration and adjusting the transit lighting conditions accordingly.

In accordance with another aspect of the present description, there is provided a non-transitory computer readable storage medium having stored thereon computer executable instructions that, when executed by a processor, cause the processor to perform the methods that have been previously described. The non-transitory computer storage medium can be integrated to the systems or assemblies that have been described in the present description. The non-transitory computer storage medium could otherwise be operatively connected with the systems or assemblies. In the present description, the terms "computer readable storage medium" and "computer readable memory" are intended to refer to a non-transitory and tangible computer product that can store and communicate executable instructions for the implementation of various steps of the method disclosed herein. The computer readable memory can be any computer data storage device or assembly of such devices, including random-access memory (RAM), dynamic RAM, read-only memory (ROM), magnetic storage devices such as hard disk drives, solid state drives, floppy disks and magnetic tape, optical storage devices such as compact discs (CDs or CDROMs), digital video discs (DVD) and Blu-Ray^{™} discs; flash drive memory, and/or other non-transitory memory technologies. A plurality of such storage devices may be provided, as can be understood by those skilled in the art. The computer readable memory may be associated with, coupled to, or included in a computer or processor configured to execute instructions contained in a computer program stored in the computer readable memory and relating to various functions associated with the computer.

### Examples

Now that different embodiments of the technology have been described, some nonlimitative examples illustrating potential implementations of the techniques will be presented. It should be noted that these examples serve an illustrative purpose only and should therefore not be considered limitative.

In a first example, one objective may be to provide "just at maturity" strawberries to the consumer, at the point of sale. In addition to the farm, the production system may include the ability to provide horticultural lighting within and during transportation, until delivery to the retail locations.

A seedling-to-shelve lightning scenario may have been developed for the plant or crop. The lighting scenario may encompass the various illumination phases needed by the plant or crop during its lifecycle. The lighting scenario may also include a final illumination phase designed to provide a UV 300 nm UV-B treatment for parasites management.

The production system can evaluate the lighting scenario and the delivery schedule, to make optimal decisions about the shipping date and time.

The production system then plans the shipment of crops, according to the travel time to their destination, so that the maturity is to be achieved before or during transportation, and that sufficient time is provided for the UV-B treatment, so that the strawberries are made available at the optimal maturity, pest-treated, at the points of sale.

The lighting scenario sequence seamlessly continues during and within the transportation mean. The departure from the initial growth facilities being calculated in function of the distance, the remaining of the lighting scenario will vary accordingly, allowing sufficient time for the scenario to conclude with the UV-B treatment just before drop at the point of sale.

In that first example, the layer of abstraction between the lighting scenario and the physical elements, strawberries and horticultural lighting within the horticultural structure and transportation vehicles provides means for aligning the delivery schedule with the lighting scenario.

In a second example, a strawberry productor may want to leverage the current knowledge about the effect of lighting on the storage life duration as well as impacts on post harvesting fruit color and nutritional qualities.

It has been demonstrated that subjecting strawberries to 295 nm during cold storage can delay mold building on strawberries for multiple days. Positive effects of blue light treatment have also been demonstrated on quality, antioxidant capacity and enzyme activity of strawberry fruit in cold storage. Blue light illumination may increase, improve, or enhance the color index, respiration rate and ethylene production in strawberries during cold storage. The treatment may also enhance the activities of specific antioxidant enzymes.

It is known that the post harvesting light treatment combination will vary based on various factors including fruit varieties and will evolve over time with the advancement of the state of knowledge: the operator may want to keep a good level of flexibility over the current and future evolutions of the light treatments.

The operator may already be implementing lighting scenario capable of evolving across multiple zones as part of the crop production. To extend the control of the light treatment of the fruits to the point where it is ultimately purchased by the consumer, cold display cases that are equipped with connected lighting fixtures are deployed at the retail locations.

The connected cold display units are then defined as a zone so that the lighting scenario sequence can seamlessly continue within the new zone during display.

In that second example, the layer of abstraction between the lighting scenario and the physical elements, strawberries and horticultural lighting within the horticultural structure and retail location, provides means for seamlessly aligning the lighting scenario with the specific need of the strawberries varieties and ripening light treatment recipe.

In a third example, it may be an objective to provide a subscription-based "pickup- and-cook" herb plants service directly to restaurants, bars, food trucks and/or private kitchens.

In this example, the growth of the herb plants may start in a horticulture structure. The plants may be subsequently shipped to the consumer consumption location (*i.e.*, the restaurants, bars, food trucks and/or private kitchens), and the growth of the plant can continue within especially designed cultivation enclosures equipped with connected grow lamps (or horticultural light sources), watering, and/or environmental control. Of course, the components and the operating conditions or parameters of the cultivation enclosures may vary according to the growing herb plants.

Herbs and similar products can be used for cooking and meal preparation. One benefit of the third example is that the herbs may be directly picked up from the plant near or at a consumption or preparation site, thereby allowing the consumption of fresh products when the products are ready.

After a certain period, the herb plants or plants may become less productive and may need to be replaced with new ones. This period generally varies from one variety to another. The subscription service may allow managing the productivity of the herb plants or plants.

Additionally, the end user may want to alter the varieties of herbs in the appliances as its need changes. For instance, in the context of a restaurant, the required herbs may need to be aligned with the changes of the menu. For doing so, the end-user may alter the subscribed selection to receive the new herb plants content.

Determining the optimal nutriment and lighting conditions may be relatively complex, and typically depend on a plurality of factors such as, for example, regular plants replacement and content flexibility. The lighting recipe may need to be tailored for specific plants content and account for unaligned growth stages and maturity targets.

For doing so, the operator may have established an operational approach where specific lighting scenarios are generated specifically for the target end-user growth mix. The use of the lighting scenario may be initiated within the horticultural structure and may continue at the consumption premises, within the cultivation enclosures.

When substantial changes are made in the herb plants mix, which may be caused, for example, by herb plants replacement and updated growth content preferences by the end-user, the lighting scenario may re-generated to support the new composition of plants content, growth stages and maturity targets.

In the third example, the layer of abstraction between the lighting scenario and the physical elements, the horticultural structure, the cultivation enclosures, and the horticultural lighting, provides means for providing a highly targeted horticultural illumination that follows the product cycles and mixture right to the end-user consumption point.

Several alternative embodiments and examples have been described and illustrated herein. The embodiments described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and not restrictive. Accordingly, while specific embodiments have been illustrated and described, numerous modifications come to mind without significantly departing from the present disclosure.

## Claims

1. A method for controlling horticultural light sources during a distribution process of a plant or crop, the distribution process including an initial phase, a transit phase and a selling phase, each phase taking place at a different location one from another, the method including:
determining a first location of the plant or crop, the first location being associated with the initial phase of the distribution process;
during the initial phase of the distribution process:
determining initial lighting conditions of the plant or crop;
illuminating the plant or crop with a first horticultural light source to meet the initial lighting conditions of the plant or crop; and
monitoring initial information representative of horticultural illumination delivered to the plant or crop during the initial phase of the distribution process;
receiving inputs indicating that the plant or crop is to be moved from the first location
towards a second location, the second location being associated with the transit phase of the distribution process;
during the transit phase of the distribution process:
determining transit lighting conditions of the plant or crop;
illuminating the plant or crop with a transit horticultural light source to meet the transit lighting conditions of the plant or crop and based on the monitored initial information; and
monitoring transit information representative of horticultural illumination delivered to the plant or crop during the transit phase of the distribution process;
receiving inputs indicating that the plant or crop is to be moved from the second location towards a third location, the third location being associated with the selling phase of the distribution process;
during the selling phase of the distribution process:
determining subsequent lighting conditions of the plant or crop; and
illuminating the plant or crop with a horticultural light source to meet the subsequent lighting conditions of the plant or crop and based on the monitored transit information;
and the method comprises tracking a position of the plant or crop during the distribution process.

2. The method of claim 1, wherein the initial phase of the distribution process is associated with a growing stage of a growth process of the plant or crop.

3. The method of claim 2, wherein the transit phase of the distribution process is associated with a flowering stage or a ripening stage of the growth process of the plant or crop.

4. The method of claim 3, wherein the selling phase of the distribution process is associated with the flowering stage, the ripening stage, or a preserving stage of the growth process of the plant or crop.

5. The method of any one of claims 1 to 4, further comprising scheduling a transfer of the plant or crop, based on said tracking the position of the plant or crop.

6. The method of any one of claims 1 to 5, further comprising determining a transit duration and based on the transit duration, adjusting the transit illumination conditions to meet a targeted maturity of the plant or crop at the end of the transit phase of the distribution process.

7. The method of claim 6, further comprising updating the transit duration based on an unexpected event and adjusting the transit lighting conditions accordingly.

8. A system (10) for controlling horticultural light sources (12A,B,C) during a distribution process of a plant or crop, the distribution process including an initial phase (16), a transit phase (18) and a selling phase (20), each phase taking place at a different location one from another, the system including:
at least three horticultural lighting sources (12A,B,C), each being respectively associated with a corresponding first location, a corresponding second location and a third location;
a server or a controller (14) operatively connected to each of said at least three horticultural lighting sources (12A,B,C), the server or controller (14) being configured for:
during the initial phase (16) of the distribution process, at the first location:
determining initial lighting conditions of the plant or crop;
sending illumination instructions to a first horticultural light source to meet the initial lighting conditions of the plant or crop; and
monitoring initial information representative of horticultural illumination delivered to the plant or crop during the initial phase (16) of the distribution process;
receiving inputs indicating that the plant or crop is to be moved from the first location towards the second location, the second location being associated with the transit phase (18) of the distribution process;
during the transit phase (18) of the distribution process, at the second location:
determining transit lighting conditions of the plant or crop;
sending illumination instructions to a transit horticultural light source to meet the transit lighting conditions of the plant or crop and based on the monitored initial information; and
monitoring transit information representative of horticultural illumination delivered to the plant or crop during the transit phase (18) of the distribution process;
receiving inputs indicating that the plant or crop is to be moved from the second location towards a third location, the third location being associated with the selling phase (20) of the distribution process;
during the selling phase (20) of the distribution process, at the third location:
determining subsequent lighting conditions of the plant or crop; and
sending illumination instructions to a horticultural light source to meet the subsequent lighting conditions of the plant or crop and based on the monitored transit information; and
a user interface configured to interact with at least one of said at least three horticultural light sources (12A,B,C) and the server or controller (14)
and the system (10) comprises a tracking module operatively connected to the user interface, the tracking module being configured for tracking a position of the plant or crop during the distribution process.

9. The system (10) of claim 8, wherein the controller (14) is further configured for determining a transit duration and based on the transit duration, adjusting the transit illumination conditions to meet a targeted maturity of the plant or crop at the end of the transit phase (18) of the distribution process.

10. The system (10) of claim 9, wherein the controller (14) is further configured for updating the transit duration based on an unexpected event and adjusting the transit lighting conditions accordingly.

11. The system of any one of claims 8 to 10, wherein a first dedicated controller is associated with the first location, a second dedicated is associated with the second location and a third dedicated controller is associated with the third location, each of the first dedicated controller, the second dedicated controller and the third dedicated controller being operatively connected to the user interface.

## Patentansprüche

1. Verfahren zum Steuern von Gartenbaulichtquellen während eines Distributionsprozesses einer Pflanze oder einer Kulturpflanze, wobei der Distributionsprozess eine Anfangsphase, eine Transitphase und eine Verkaufsphase beinhaltet, wobei jede Phase an voneinander verschiedenen Standorten stattfindet, wobei das Verfahren Folgendes beinhaltet:
Bestimmen eines ersten Standorts der Pflanze oder der Kulturpflanze, wobei der erste Standort mit der Anfangsphase des Distributionsprozesses assoziiert ist;
während der Anfangsphase des Distributionsprozesses:
Bestimmen der anfänglichen Beleuchtungsbedingungen der Pflanze oder der Kulturpflanze;
Beleuchten der Pflanze oder der Kulturpflanze mit einer ersten Gartenbaulichtquelle, um die anfänglichen Beleuchtungsbedingungen der Pflanze oder der Kulturpflanze zu erfüllen; und
Überwachen anfänglicher Informationen, die die Gartenbaubeleuchtung repräsentieren, die der Pflanze oder der Kulturpflanze während der Anfangsphase des Distributionsprozesses bereitgestellt wird;
Empfangen von Eingaben, die angeben, dass die Pflanze oder die Kulturpflanze von dem ersten Standort zu einem zweiten Standort bewegt werden soll, wobei der zweite Standort mit der Transitphase des Distributionsprozesses assoziiert ist;
während der Transitphase des Distributionsprozesses:
Bestimmen der Transitbeleuchtungsbedingungen der Pflanze oder der Kulturpflanze;
Beleuchten der Pflanze oder der Kulturpflanze mit einer Transitgartenbaulichtquelle, um die Transitbeleuchtungsbedingungen der Pflanze oder der Kulturpflanze zu erfüllen und basierend auf den überwachten anfänglichen Informationen; und
Überwachen von Transitinformationen, die die Gartenbaubeleuchtung repräsentieren, die der Pflanze oder der Kulturpflanze während der Transitphase des Distributionsprozesses bereitgestellt wird;
Empfangen von Eingaben, die angeben, dass die Pflanze oder die Kulturpflanze von dem zweiten Standort zu einem dritten Standort bewegt werden soll, wobei der dritte Standort mit der Verkaufsphase des Distributionsprozesses assoziiert ist;
während der Verkaufsphase des Distributionsprozesses:
Bestimmen nachfolgender Beleuchtungsbedingungen der Pflanze oder der Kulturpflanze; und
Beleuchten der Pflanze oder der Kulturpflanze mit einer Gartenbaulichtquelle, um die nachfolgenden Beleuchtungsbedingungen der Pflanze oder der Kulturpflanze zu erfüllen und basierend auf den überwachten Transitinformationen;
und wobei das Verfahren Verfolgen einer Position der Pflanze oder der Kulturpflanze während des Distributionsprozesses umfasst.

2. Verfahren nach Anspruch 1, wobei die Anfangsphase des Distributionsprozesses mit einem Wachstumsstadium eines Wachstumsprozesses der Pflanze oder der Kulturpflanze assoziiert ist.

3. Verfahren nach Anspruch 2, wobei die Transitphase des Distributionsprozesses mit einem Blütestadium oder einem Reifestadium des Wachstumsprozesses der Pflanze oder der Kulturpflanze assoziiert ist.

4. Verfahren nach Anspruch 3, wobei die Verkaufsphase des Distributionsprozesses mit dem Blütestadium, dem Reifestadium oder einem Erhaltungsstadium des Wachstumsprozesses der Pflanze oder der Kulturpflanze assoziiert ist.

5. Verfahren nach einem der Ansprüche 1 bis 4, ferner umfassend Planen eines Transfers der Pflanze oder der Kulturpflanze basierend auf dem Verfolgen der Position der Pflanze oder der Kulturpflanze.

6. Verfahren nach einem der Ansprüche 1 bis 5, ferner umfassend Bestimmen einer Transitdauer und basierend auf der Transitdauer, Anpassen der Transitbeleuchtungsbedingungen, um am Ende der Transitphase des Distributionsprozesses eine Zielreife der Pflanze oder der Kulturpflanze zu erreichen.

7. Verfahren nach Anspruch 6, ferner umfassend Aktualisieren der Transitdauer basierend auf einem unerwarteten Ereignis und entsprechendes Anpassen der Transitbeleuchtungsbedingungen.

8. System (10) zum Steuern von Gartenbaulichtquellen (12A,B,C) während eines Distributionsprozesses einer Pflanze oder einer Kulturpflanze, wobei der Verteilungsprozess eine Anfangsphase (16), eine Transitphase (18) und eine Verkaufsphase (20) beinhaltet, wobei jede Phase an voneinander verschiedenen Standorten stattfindet, wobei das System Folgendes beinhaltet:
mindestens drei Gartenbaubeleuchtungsquellen (12A,B,C), die jeweils mit einem entsprechenden ersten Standort, einem entsprechenden zweiten Standort und einem dritten Standort assoziiert sind;
einen Server oder eine Steuerung (14), der bzw. die mit jeder der mindestens drei Gartenbaubeleuchtungsquellen (12A,B,C) wirkverbunden ist, wobei der Server oder die Steuerung (14) zu Folgendem ausgelegt ist:
während der Anfangsphase (16) des Distributionsprozesses an dem ersten Standort:
Bestimmen der anfänglichen Beleuchtungsbedingungen der Pflanze oder der Kulturpflanze;
Senden von Beleuchtungsanweisungen an eine erste Gartenbaulichtquelle, um die anfänglichen Beleuchtungsbedingungen der Pflanze oder der Kulturpflanze zu erfüllen; und
Überwachen anfänglicher Informationen, die die Gartenbaubeleuchtung repräsentieren, die der Pflanze oder der Kulturpflanze während der Anfangsphase (16) des Distributionsprozesses bereitgestellt wird;
Empfangen von Eingaben, die angeben, dass die Pflanze oder die Kulturpflanze von dem ersten Standort zu dem zweiten Standort bewegt werden soll, wobei der zweite Standort mit der Transitphase (18) des Distributionsprozesses assoziiert ist;
während der Transitphase (18) des Distributionsprozesses an dem zweiten Standort:
Bestimmen der Transitbeleuchtungsbedingungen der Pflanze oder der Kulturpflanze;
Senden von Beleuchtungsanweisungen an eine Transitgartenbaulichtquelle, um die Transitbeleuchtungsbedingungen der Pflanze oder der Kulturpflanze zu erfüllen und basierend auf den überwachten anfänglichen Informationen; und
Überwachen von Transitinformationen, die die Gartenbaubeleuchtung repräsentieren, die der Pflanze oder der Kulturpflanze während der Transitphase (18) des Distributionsprozesses bereitgestellt wird;
Empfangen von Eingaben, die angeben, dass die Pflanze oder die Kulturpflanze von dem zweiten Standort zu einem dritten Standort bewegt werden soll, wobei der dritte Standort mit der Verkaufsphase (20) des Distributionsprozesses assoziiert ist;
während der Verkaufsphase (20) des Distributionsprozesses an dem dritten Standort:
Bestimmen nachfolgender Beleuchtungsbedingungen der Pflanze oder der Kulturpflanze; und
Senden von Beleuchtungsanweisungen an eine Transitgartenbaulichtquelle, um die nachfolgenden Beleuchtungsbedingungen der Pflanze oder der Kulturpflanze zu erfüllen und basierend auf den überwachten Transitinformationen; und
eine Benutzerschnittstelle, ausgelegt zum Interagieren mit mindestens einer der mindestens drei Gartenbaulichtquellen (12A,B,C) und dem Server oder der Steuerung (14),
und wobei das System (10) ein Verfolgungsmodul umfasst, das mit der Benutzerschnittstelle wirkverbunden ist, wobei das Verfolgungsmodul zum Verfolgen einer Position der Pflanze oder der Kulturpflanze während des Distributionsprozesses ausgelegt ist.

9. System (10) nach Anspruch 8, wobei die Steuerung (14) ferner ausgelegt ist zum Bestimmen einer Transitdauer und basierend auf der Transitdauer, Anpassen der Transitbeleuchtungsbedingungen, um am Ende der Transitphase (18) des Distributionsprozesses eine Zielreife der Pflanze oder der Kulturpflanze zu erreichen.

10. System (10) nach Anspruch 9, wobei die Steuerung (14) ferner ausgelegt ist zum Aktualisieren der Transitdauer basierend auf einem unerwarteten Ereignis und entsprechenden Anpassen der Transitbeleuchtungsbedingungen.

11. System nach einem der Ansprüche 8 bis 10, wobei eine erste dedizierte Steuerung mit dem ersten Standort assoziiert ist, eine zweite dedizierte Steuerung mit dem zweiten Standort assoziiert ist und eine dritte dedizierte Steuerung mit dem dritten Standort assoziiert ist, wobei die erste dedizierte Steuerung, die zweite dedizierte Steuerung und die dritte dedizierte Steuerung jeweils mit der Benutzerschnittstelle wirkverbunden sind.

## Revendications

1. Procédé de contrôle de sources lumineuses horticoles pendant un processus de distribution d'une plante ou d'une culture, le processus de distribution comprenant une phase initiale, une phase de transit et une phase de vente, chaque phase ayant lieu à un emplacement différent l'un de l'autre, le procédé comprenant :
la détermination d'un premier emplacement de la plante ou de la culture, le premier emplacement étant associé à la phase initiale du processus de distribution ;
pendant la phase initiale du processus de distribution :
la détermination de conditions d'éclairage initial de la plante ou de la culture ;
l'éclairage de la plante ou de la culture avec une première source lumineuse horticole pour répondre aux conditions d'éclairage initial de la plante ou de la culture ; et
la surveillance d'informations initiales représentant l'éclairage horticole fourni à la plante ou à la culture pendant la phase initiale du processus de distribution ;
la réception d'entrées indiquant que la plante ou la culture doit être déplacée du premier emplacement vers un deuxième emplacement, le deuxième emplacement étant associé à la phase de transit du processus de distribution ;
pendant la phase de transit du processus de distribution :
la détermination de conditions d'éclairage de transit de la plante ou de la culture ;
l'éclairage de la plante ou de la culture avec une source lumineuse horticole de transit pour répondre aux conditions d'éclairage de transit de la plante ou de la culture et sur la base des informations initiales surveillées ; et
la surveillance des informations de transit représentant l'éclairage horticole fourni à la plante ou à la culture pendant la phase de transit du processus de distribution ;
la réception d'entrées indiquant que la plante ou la culture doit être déplacée du deuxième emplacement vers un troisième emplacement, le troisième emplacement étant associé à la phase de vente du processus de distribution ;
pendant la phase de vente du processus de distribution :
la détermination de conditions d'éclairage ultérieur de la plante ou de la culture ; et
l'éclairage de la plante ou de la culture avec une source lumineuse horticole pour répondre aux conditions d'éclairage ultérieur de la plante ou de la culture et sur la base des informations de transit surveillées ;
et le procédé comprend le suivi d'une position de la plante ou de la culture pendant le processus de distribution.

2. Procédé selon la revendication 1, dans lequel la phase initiale du processus de distribution est associée à une étape de croissance d'un processus de croissance de la plante ou de la culture.

3. Procédé selon la revendication 2, dans lequel la phase de transit du processus de distribution est associée à une étape de floraison ou à une étape de maturation du processus de croissance de la plante ou de la culture.

4. Procédé selon la revendication 3, dans lequel la phase de vente du processus de distribution est associée à l'étape de floraison, à l'étape de maturation ou à une étape de conservation du processus de croissance de la plante ou de la culture.

5. Procédé selon l'une quelconque des revendications 1 à 4, comprenant en outre la planification d'un transfert de la plante ou de la culture, sur la base dudit suivi de la position de la plante ou de la culture.

6. Procédé selon l'une quelconque des revendications 1 à 5, comprenant en outre la détermination d'une durée de transit et, sur la base de la durée de transit, le réglage des conditions d'éclairage de transit pour répondre à une maturité ciblée de la plante ou de la culture à la fin de la phase de transit du processus de distribution.

7. Procédé selon la revendication 6, comprenant en outre la mise à jour de la durée de transit sur la base d'un événement inattendu et le réglage des conditions d'éclairage de transit en conséquence.

8. Système (10) de contrôle de sources lumineuses horticoles (12A, B, C) pendant un processus de distribution d'une plante ou d'une culture, le processus de distribution comprenant une phase initiale (16), une phase de transit (18) et une phase de vente (20), chaque phase ayant lieu à un emplacement différent l'un de l'autre, le système comprenant :
au moins trois sources lumineuses horticoles (12A, B, C), chacune étant respectivement associée à un premier emplacement correspondant, un deuxième emplacement correspondant et un troisième emplacement ;
un serveur ou un contrôleur (14) connecté en fonctionnement à chacune desdites au moins trois sources lumineuses horticoles (12A, B, C), le serveur ou contrôleur (14) étant configuré pour :
pendant la phase initiale (16) du processus de distribution, au premier emplacement :
la détermination de conditions d'éclairage initial de la plante ou de la culture ;
envoyer des instructions d'éclairage à une première source lumineuse horticole pour répondre aux conditions d'éclairage initial de la plante ou de la culture ; et
surveiller des informations initiales représentant l'éclairage horticole fourni à la plante ou à la culture pendant la phase initiale (16) du processus de distribution ;
recevoir des entrées indiquant que la plante ou la culture doit être déplacée du premier emplacement vers un deuxième emplacement, le deuxième emplacement étant associé à la phase de transit (18) du processus de distribution ;
pendant la phase de transit (18) du processus de distribution, au deuxième emplacement :
la détermination de conditions d'éclairage de transit de la plante ou de la culture ;
envoyer des instructions d'éclairage à une source lumineuse horticole de transit pour répondre aux conditions d'éclairage de transit de la plante ou de la culture et sur la base des informations initiales surveillées ; et
surveiller les informations de transit représentant l'éclairage horticole fourni à la plante ou à la culture pendant la phase de transit (18) du processus de distribution ;
recevoir des entrées indiquant que la plante ou la culture doit être déplacée du deuxième emplacement vers un troisième emplacement, le troisième emplacement étant associé à la phase de vente (20) du processus de distribution ;
pendant la phase de vente (20) du processus de distribution, au troisième emplacement :
la détermination de conditions d'éclairage ultérieur de la plante ou de la culture ; et
envoyer des instructions d'éclairage à une source lumineuse horticole pour répondre aux conditions d'éclairage ultérieur de la plante ou de la culture et sur la base des informations de transit surveillées ; et
une interface utilisateur configurée pour interagir avec au moins l'une desdites au moins trois sources lumineuses horticoles (12A, B, C) et le serveur ou le contrôleur (14)
et le système (10) comprend un module de suivi connecté en fonctionnement à l'interface utilisateur, le module de suivi étant configuré pour suivre une position de la plante ou de la culture pendant le processus de distribution.

9. Système (10) selon la revendication 8, dans lequel le contrôleur (14) est en outre configuré pour déterminer une durée de transit et, sur la base de la durée de transit, régler les conditions d'éclairage de transit pour atteindre une maturité ciblée de la plante ou de la culture à la fin de la phase de transit (18) du processus de distribution.

10. Système (10) selon la revendication 9, dans lequel le contrôleur (14) est en outre configuré pour mettre à jour la durée de transit sur la base d'un événement inattendu et régler les conditions d'éclairage de transit en conséquence.

11. Système selon l'une quelconque des revendications 8 à 10, dans lequel un premier contrôleur dédié est associé au premier emplacement, un deuxième contrôleur dédié est associé au deuxième emplacement et un troisième contrôleur dédié est associé au troisième emplacement, chacun du premier contrôleur dédié, du deuxième contrôleur dédié et du troisième contrôleur dédié étant connecté en fonctionnement à l'interface utilisateur.
